# EUROPEAN PATENT SPECIFICATION

(11) **EP 1 157 549 B1**
(45) Date of publication and mention of the grant of the patent: **21.10.2009**
(21) Application number: 00977584.2
(22) Date of filing: 27.11.2000
(51) Int. Cl.: H04N 5/445, H04N 5/44, H04N 5/50

(54) **TUNING A SIGNAL RECEIVER**
ABSTIMMUNG EINES SIGNALEMPFÄNGERS
REGLAGE D'UN RECEPTEUR DE SIGNAUX

(30) Priority: 15.12.1999 EP 99204331
(43) Date of publication of application: 28.11.2001
(73) Proprietor: Pace Plc, Saltaire Shipley West Yorkshire BD18 3LF (GB)
(72) Inventor: VERHAEGHE, Jeroen, NL-5656 AA Eindhoven (NL)
(74) Representative: Wood, Graham
(86) International application number: PCT/EP2000/011827
(87) International publication number: WO 2001/045395

(56) References cited:
- EP-A- 0 594 241
- WO-A-97/32434
- US-A- 5 734 444

## Description

### FIELD OF THE INVENTION

The invention relates to a signal receiver and a method of tuning such a receiver to a channel representing a desired one of a plurality of receivable signals. Examples of such signal receivers are radio receivers, television receivers, teletext receivers, and Internet web browsers.

### BACKGROUND OF THE INVENTION

Signal receivers are generally controlled by channel selection commands identifying a selected channel. The channel selection commands are generated by a (remote) control device.

Television receivers are known which enable the user to return to the previously received channel by pressing a so-called swap key. A disadvantage of this prior art receiver is that only one previous channel can be recalled.

International Patent Application WO-A-97/32434 discloses a television receiver having a favorite channel key. While watching a channel, the user can press and hold the favorite channel key for a longer period of time so as to mark said channel as a favorite channel. When two or more favorite channels have been programmed in this manner, successively pressing the favorite channel key for a short period of time causes the receiver to cyclically tune to the favorite channels. The user of this prior art receiver must deliberately mark the channels to which he may want to return.

Internet web browsers keep a list of previously consulted web pages so as to enable the user to recall said pages later. The user must explicitly select the page to be recalled from said list. US 5734444 discloses a channel history memory for storing program channels which have been selected during past weeks.

### OBJECT AND SUMMARY OF THE INVENTION

It is an object of the invention to provide an improved method of tuning such receiver.

These and other objects are achieved by the receiver and method as defined in the independent claims 1 and 6. Advantageous embodiments are defined in the dependent claims.

The receiver of the invention keeps a list of at least three previously selected channels without user intervention The receiver is then cyclically tuned to the listed channels in response to successive operations of a recall command.

It is achieved by the invention that the user can easily "zap" between the current and at least two previously selected channels with a single command key. This is a significant advantage over merely repetitively applying the concept of the prior art swap key to a multiplicity of channels, which would require the receiver to have a corresponding number of swap keys.

It should be noted that a receiver which keeps a history list of channels and provides navigation through said list is proposed. In Applicant's non-published International Patent Application IB99/00819 (PHN 16.915) however, this document does not disclose cyclically tuning to the listed channels.

These and other aspects of the invention are apparent from and will be elucidated with reference to the embodiments described hereinafter.

### BRIEF DESCRIPTION OF THE DRAWINGS

Fig. 1 shows schematically a diagram of a television receiver in accordance with the invention.
Fig. 2 shows a remote control device for controlling the receiver which is shown in Fig. 1.
Figs. 3-5 show flow chart diagrams to illustrate the operation of embodiments of the receiver in accordance with the invention.

### DESCRIPTION OF EMBODIMENTS

The invention will now be described with reference to a broadcast television receiver, in which the receivable signals are television programs. It will be appreciated, however, that the invention can be applied to other types of receivers. For example, the receiver may be a teletext receiver in which the signals are teletext pages and the expression "channels" refer to teletext page numbers, or an Internet web browser in which the signals are web pages and the expression "channels" refers to Internet web addresses.

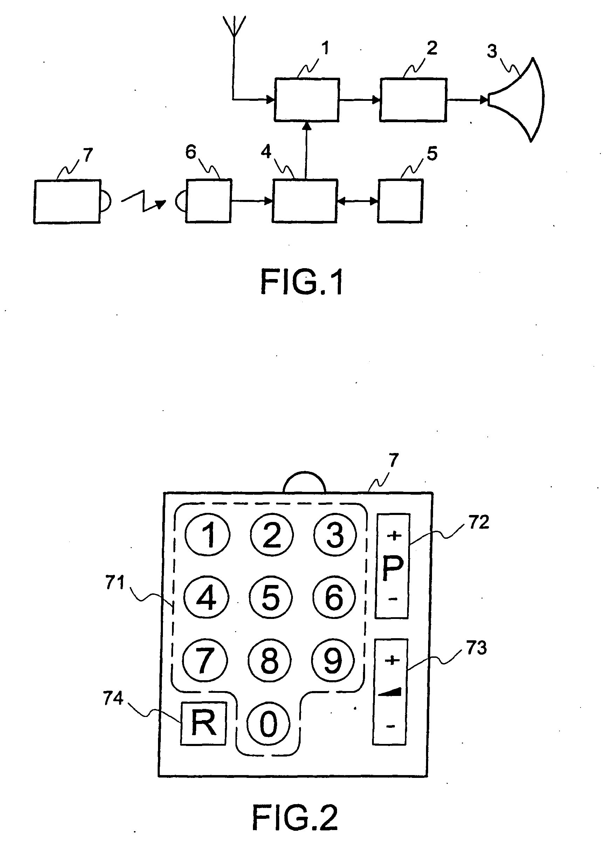

Fig. 1 shows schematically a diagram of a television receiver in accordance with the invention. The receiver comprises a tuner 1 for receiving a terrestrial or cable multichannel signal, a signal processor 2, a reproduction unit 3, a control circuit 4 in the form of a microprocessor, a history memory 5, a remote control receiver 6 and a remote control transmitter **7.** An additional keyboard (not shown) may be fixedly connected to the receiver.

Fig. 2 shows an exemple of the layout of the remote control transmitter **7.** The transmitter comprises a numeric keypad **71,** a program up/down key **72,** a volume up/down key **73,** and a recall key **74.** The transmitter **7** is conventional in the sense that upon pressing a key it transmits an infrared command signal identifying said key. The commands issued in response to operation of the numeric keypad **71** and the program up/down key **72** constitute channel selection commands. It will here be assumed that channels are represented by userdefined program numbers. For example, television station A on channel 25 is represented by program number 1, station B on channel 7 by program number 2, station C on channel 54 by program number 3, etc. The relation between the physical network channel number and the corresponding program number is defined in a look-up table which is stored in an internal memory of the receiver's control circuit **4. The** history memory **5** of the receiver has a given number N≥3 of memory locations L(1)..L(N), each for storing one program number.

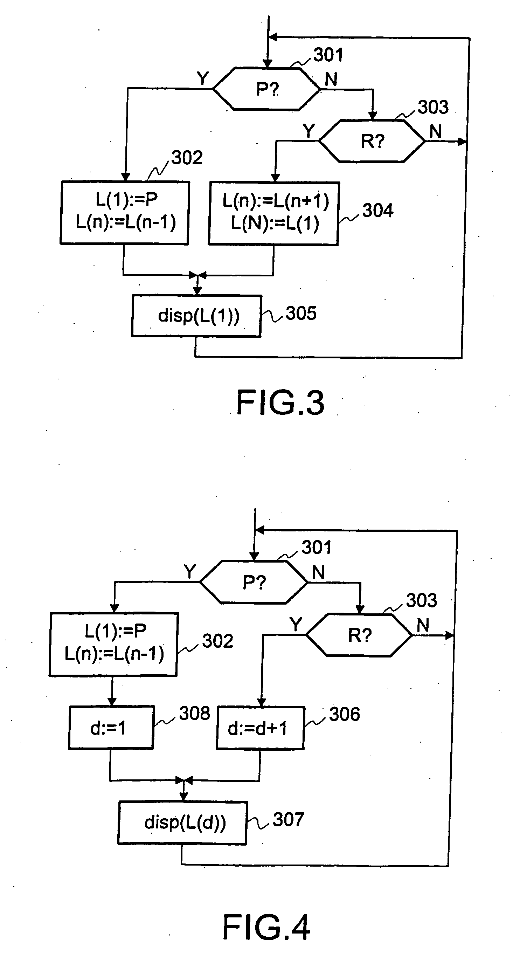

The operation of the receiver will now be described with reference to a flow chart of operation steps, which is shown in Fig. 3 and carried out by the control circuit. In a step **301,** the control circuit determines whether a program number P is entered by operating one of the channel selection keys **71** or **72.** If that is the case, the control circuit stores, in a step **302,** the relevant program number **P** in the first memory location L(1). In the same step, the program number previously stored in L(1) is shifted to L(2), the previous contents of L(2) are shifted to L(3), etc. The previous contents of the last memory location L(N) are thereby lost.

In a step **303,** the control circuit determines whether the recall key **74** (see Fig. 2) is operated. If that is the case, the program numbers stored in memory **5** are cyclically shifted in the other direction in a step **304.** That is, the contents of L(2) is shifted to L(1), the contents of L(3) are shifted to L(2) etc., and the contents of L(1) are shifted to L(N).

In a step **305,** the control circuit consults the look-up table to retrieve the network channel number represented by the program number stored in L(1), and applies said channel number to the tuner. The receiver is thus always tuned to the television station represented by the program number stored in L(1).

The following Table I shows the effect of the above described operations for a given sequence of user operations. In this example, the history memory **5** is assumed to have 6 memory locations L(1)..L(6). Each column of Table I shows the contents of the history memory in response to the user command shown above said column. L(1) represents the program to which the receiver is tuned. For clarity, the displayed program number is in bold print and is underlined. In the example, the programs 1, 2, 3, 4, 5 and 6 are successively selected with channel selection keys **71** and/or **72.** Each time, the relevant program number is stored in L(1), and the previously stored program numbers are shifted down. Then, the recall key is pressed twice. Each operation of the recall key causes the memory contents to be cyclically shifted upwards. The two recall operations cause the programs 5 and 4, in that order, to be recalled from the history list. After the two recall operations, program 7 is manually selected and subsequently displayed.

**Table I**

| | 1 | 2 | 3 | 4 | 5 | 6 | R | R | 7 |
|---|---|---|---|---|---|---|---|---|---|
| L(1) | **1** | **2** | **3** | **4** | **5** | **6** | **5** | **4** | **7** |
| L(2) | | 1 | 2 | 3 | 4 | 5 | 4 | 3 | 4 |
| L(3) | | | 1 | 2 | 3 | 4 | 3 | 2 | 3 |
| L(4) | | | | 1 | 2 | 3 | 2 | 1 | 2 |
| L(5) | | | | | 1 | 2 | 1 | 6 | 1 |
| L(6) | | | | | | 1 | 6 | 5 | 6 |

The above described embodiment of the control circuit is straightforward, easy to implement, and therefore cost-effective. It is also consistent in that upon pressing the recall key after a manual channel selection, the previously viewed program is recalled. For example, if the recall key is pressed after the manual selection of program 7, then the receiver will recall the previously displayed program 4.

In this embodiment, the program which is actually removed from the list by a manual channel selection depends on the number of recall operations. In the above described example, program 5 has been removed after manual selection of program 7, even though said program has been viewed more recently than, for example, program 1. This may not comply with the user's expectations.

Further embodiments of the receiver relate to alternatives as regards the program which is removed from the list upon manual selection after one or more recall operations, and to the order of programs being kept in the list.

Fig. 4 shows a flow chart of operations in accordance with an embodiment of the receiver which keeps the most recently selected programs and cyclically displays them in order of selection. The steps **301, 302** and **303** are the same as in Fig. 3. A display pointer d is now used to identify the location in the history memory **5** which stores the program to be displayed. The display pointer d is incremented by 1 in a step **306** in response to activation of the recall key. Note that this is a modulo-N operation, so that successive operations of the recall key cause the display pointer to cycle through the listed program numbers. In a step **307,** the receiver is tuned to the channel identified by the program number stored in L(d). Similarly as in Fig. 3, a manually selected program is stored on top of the list and the previously stored program numbers are shifted downwards in the step **302.** Subsequently, the display pointer d is set to 1 in a step **308,** so that the manually selected program is indeed displayed.

The following Table II shows the effect of this embodiment for the same sequence of user operations as in Table I. In each column, the program number being displayed is in bold print and is underlined. The least recently selected program is now always removed from the list, regardless of the number of recall operations.

**Table II**

| | 1 | 2 | 3 | 4 | 5 | 6 | R | R | 7 |
|---|---|---|---|---|---|---|---|---|---|
| L(1) | **1** | **2** | **3** | **4** | **5** | **6** | 6 | 6 | **7** |
| L(2) | | 1 | 2 | 3 | 4 | 5 | **5** | 5 | 6 |
| L(3) | | | 1 | 2 | 3 | 4 | 4 | **4** | 5 |
| L(4) | | | | 1 | 2 | 3 | 3 | 3 | 4 |
| L(5) | | | | | 1 | 2 | 2 | 2 | 3 |
| L(6) | | | | | | 1 | 1 | 1 | 2 |

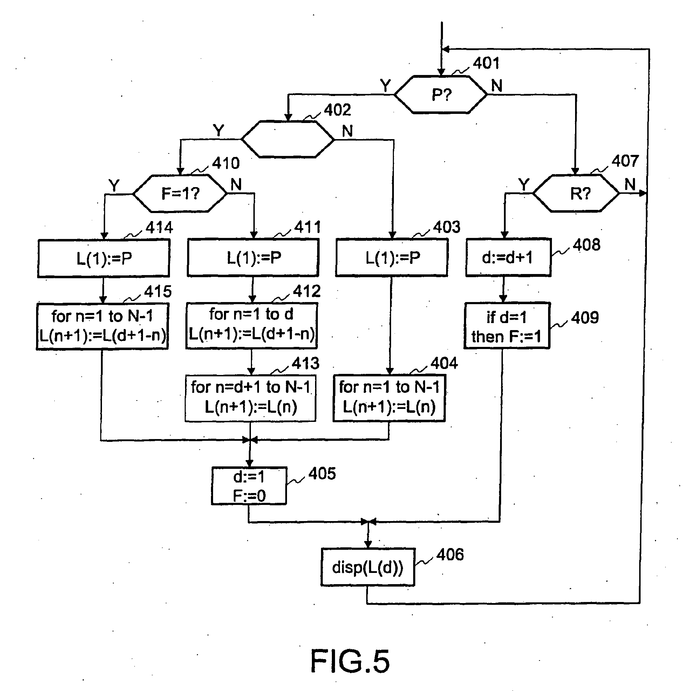

Fig. 5 shows a flow chart of operations in accordance with a further embodiment of the receiver. This embodiment is particularly attractive because the receiver stores and cyclically displays the most recently displayed programs.

In a step **401,** the circuit determines whether a program number P is entered by operating one of the channel selection keys **71** or **72.** In a step **402,** it is determined whether said channel selection is the first manual selection after a recall operation. If that is not the case, the circuit stores, in a step **403,** the relevant program number P in the first memory location L(1), and shifts, in a step **404,** the list of already stored program numbers downwards. The steps **403** and **404** collectively correspond to the step **302** in Figs. 3 and 4. A display pointer d is again used to identify the location in memory 5 which stores the program to be displayed. In a step **405,** said display pointer d assumes the value 1. A flag F is reset in the same step. The meaning of this flag will be described later. In a step **406,** the receiver is subsequently tuned to the channel identified by the contents of L(d). After a manual selection, the displayed memory location is always L(1).

In a step **407,** the control circuit determines whether the recall key **74** has been pressed. If that is the case, the display pointer d is incremented by 1 in a step **408.** Again, this is a modulo-N operation, so that successive operations of the recall key cause the display pointer to cycle through the listed program numbers. In a step **409,** a flag F is set if operation of the recall key causes the display pointer to acquire the value d=1 again. The value F=1 thus means that the user has made at least one complete recall cycle.

The flag **F** is tested in a step **410** when a program is manually selected for the first time after a recall operation. If F=0, i.e. if the user did not recall all the listed programs before the manual selection, the following steps are carried out:
- the currently selected program P is stored in L(1) in a step **411,**
- the previously displayed programs L(1)..L(d) are reversed in order and shifted to L(2)..L(d+1) in a step **412,** and
- the remainder of the list is shifted down in a step **413.**

The following Table III illustrates the effect of this operation. Upon manual selection of program 7 and storage of said number in L(1), the sub-sequence 6,5,4 resulting from the recall operations is reversed in order.

**Table III**

| | 1 | 2 | 3 | 4 | 5 | 6 | R | R | 7 |
|---|---|---|---|---|---|---|---|---|---|
| L(1) | **1** | **2** | **3** | **4** | **5** | **6** | 6 | 6 | **7** |
| L(2) | | 1 | 2 | 3 | 4 | 5 | **5** | 5 | 4 |
| L(3) | | | 1 | 2 | 3 | 4 | 4 | **4** | 5 |
| L(4) | | | | 1 | 2 | 3 | 3 | 3 | 6 |
| L(5) | | | | | 1 | 2 | 2 | 2 | 3 |
| L(6) | | | | | | 1 | 1 | 1 | 2 |
| d | 1 | 1 | 1 | 1 | 1 | 1 | 2 | 3 | 1 |
| F | 0 | 0 | 0 | 0 | 0 | 0 | 0 | 0 | 0 |

The last column now shows the order in which the listed programs were displayed before the manual selection of program 7. Note the difference with the last column of Table II where the programs are listed in order of selection.

The following Table IV shows the situation after the user has at least once recalled all the programs stored in the list. The flag F has thus been set in the step **409.** In this example, the recall key has been pressed eight times, so that again program 4 is displayed prior to manual selection of program 7.

**Table IV**

| | 1 | 2 | 3 | 4 | 5 | 6 | R | R | R | R | R | R | R | R | 7 |
|---|---|---|---|---|---|---|---|---|---|---|---|---|---|---|---|
| L(1) | **1** | **2** | **3** | **4** | **5** | **6** | 6 | 6 | 6 | 6 | 6 | **6** | 6 | 6 | **7** |
| L(2) | | 1 | 2 | 3 | 4 | 5 | **5** | 5 | 5 | 5 | 5 | 5 | **5** | 5 | 4 |
| L(3) | | | | 1 | 2 | 3 | 4 | 4 | **4** | 4 | 4 | 4 | 4 | **4** | 5 |
| L(4) | | | | 1 | 2 | 3 | 3 | 3 | **3** | 3 | 3 | 3 | 3 | 3 | 6 |
| L(5) | | | | | 1 | 2 | 2 | 2 | 2 | **2** | 2 | 2 | 2 | 2 | 1 |
| L(6) | | | | | | 1 | 1 | 1 | 1 | 1 | **1** | 1 | 1 | 1 | 2 |
| d | 1 | 1 | 1 | 1 | 1 | 1 | 2 | 3 | 4 | 5 | 6 | 1 | 2 | 3 | 1 |
| F | 0 | 0 | 0 | 0 | 0 | 0 | 0 | 0 | 0 | 0 | 0 | 1 | 1 | 1 | 0 |

The last column of Table IV differs from the last column of Table III in that the programs 1 and 2 are now kept in the list, because they have been displayed recently. Program 3 is removed as it is the least recently displayed program. This is achieved by steps **414** and **415.** Said steps are carried out if (i) a program is manually selected for the first time after a recall operation (result of step **402**), and (ii) the user cycled at least once through all the programs in the list prior to said manual selection (result of step **410**). More particularly: step **414** arranges the storage of the manually selected program P in L(1), and step **415** reverses the order of all previously displayed programs, and arranges their storage in L(2)..L(N).

Plural alternatives as regards the program which is to be removed from the list upon manual channel selection after a recall operation have been shown. Plural alternatives as regards the order in which the programs are kept in the list have also been shown. The mere existence of these alternatives already shows that the invention is more than a straightforward extension of the prior-art swap key for recalling one channel (N=2) to a receiver having N≥ 3 history memory locations for recalling two or more previously selected channels.

In summary, a method and an arrangement are disclosed for tuning a signal receiver such as a broadcast television receiver. The receiver includes a (remote) control device (7) having conventional channel selection keys (71,72) for manually selecting a channel or program. The receiver keeps a list of three or more selected channels in a history memory (5). The remote control device (7) further includes a recall key (74) for cyclically tuning the receiver to the listed channels. The channel being removed from the list in response to a manual channel selection is preferable the least recently viewed channel, so that the most recently viewed channels are recalled by the recall key.

## Claims

1. A method of tuning a signal receiver, comprising the steps of:
- tuning the receiver to a selected channel representing one of a plurality of receivable signals in response to a channel selection command identifying said selected channel;
- keeping a list of at least three previously selected channels in a history memory,
- storing the selected channel in said history memory in response to the channel selection command, and
- cyclically tuning the receiver to the at least three previously selected channels in a history memory in response to successive operations of a user-operable recall command (74).

2. A method as claimed in claim 1, wherein the history memory is updated in response to the channel selection command such that the least recently selected channel is removed from said history memory.

3. A method as claimed in claim 1, wherein the history memory is updated in response to the channel selection command such that the channel to which the receiver was least recently tuned is removed from said history memory.

4. A method as claimed in claim 2 or 3, wherein the step of cyclically tuning comprises tuning the receiver to the listed channels in reverse order of selection.

5. A method as claimed in claim 2 or 3, wherein the step of cyclically tuning comprises tuning the receiver to the listed channels in reverse order of previous tuning.

6. A signal receiver comprising:
- tuning means (1) for tuning the receiver to a channel representing one of a plurality of receivable signals;
- user-operable input means (7) for selecting a channel in response to a channel selection command (71,72);
- a history memory (5) for keeping a list of at least three previously selected channels, and
- control means (4) arranged in response to the channel selection command to store the selected channel in said history memory, and further arranged to control the tuning means to cyclically tune the receiver to the at least three previously selected channels in a history memory in response to successive operations of a user-operable recall command (74).

## Patentansprüche

1. Verfahren zum Abstimmen eines Signalempfängers, das die folgenden Schritte beinhaltet:
- Abstimmen des Empfängers auf einen gewählten Kanal, der eines aus einer Mehrzahl von empfangbaren Signalen umfasst, als Reaktion auf einen Kanalauswahlbefehl, der den genannten gewählten Kanal repräsentiert;
- Führen einer Liste von wenigstens drei zuvor gewählten Kanälen in einem Historienspeicher,
- Speichern des gewählten Kanals in dem genannten Historienspeicher als Reaktion auf den Kanalauswahlbefehl, und
- zyklisches Abstimmen des Empfängers auf die wenigstens drei zuvor gewählten Kanäle in einem Historienspeicher als Reaktion auf aufeinander folgende Aktivierungen eines vom Benutzer aktivierbaren Recall-Befehls (74).

2. Verfahren nach Anspruch 1, wobei der Historienspeicher als Reaktion auf den Kanalauswahlbefehl so aktualisiert wird, dass der am weitesten zurückliegend gewählte Kanal aus dem genannten Historienspeicher entfernt wird.

3. Verfahren nach Anspruch 1, wobei der Historienspeicher als Reaktion auf den Kanalauswahlbefehl so aktualisiert wird, dass der Kanal, auf den der Empfänger am weitesten zurückliegend abgestimmt wurde, aus dem genannten Historienspeicher entfernt wird.

4. Verfahren nach Anspruch 2 oder 3, wobei der Schritt des zyklischen Abstimmens das Abstimmen des Empfängers auf die aufgeführten Kanäle in umgekehrter Auswahlreihenfolge beinhaltet.

5. Verfahren nach Anspruch 2 oder 3, wobei der Schritt des zyklischen Abstimmens das Abstimmen des Empfängers auf die aufgeführten Kanäle in umgekehrter Reihenfolge früherer Abstimmungen beinhaltet.

6. Signalempfänger, der Folgendes umfasst:
- ein Abstimmmittel (1) zum Abstimmen des Empfängers auf einen Kanal, der eines aus einer Mehrzahl von empfangbaren Signalen repräsentiert;
- ein vom Bediener aktivierbares Eingabemittel (7) zum Wählen eines Kanals als Reaktion auf einen Kanalauswahlbefehl (71, 72);
- einen Historienspeicher (5) zum Führen einer Liste von wenigstens drei zuvor gewählten Kanälen, und
- ein Steuermittel (4) mit der Aufgabe, als Reaktion auf den Kanalauswahlbefehl den gewählten Kanal in dem genannten Historienspeicher zu speichern, und ferner mit der Aufgabe, das Abstimmmittel so zu steuern, dass es den Empfänger auf die wenigstens drei zuvor gewählten Kanäle in einem Historienspeicher als Reaktion auf aufeinander folgende Aktivierungen eines vom Anwender aktivierbaren Recall-Befehls (74) zyklisch abstimmt.

## Revendications

1. Procédé de réglage d'un récepteur de signaux, comprenant les étapes consistant à :
- régler le récepteur sur un canal sélectionné qui représente l'un d'une pluralité de signaux recevables en réaction à une instruction de sélection de canal laquelle identifie ledit canal sélectionné ;
- conserver, dans une mémoire historique, une liste d'au moins trois canaux ayant été sélectionnés précédemment ;
- stocker le canal sélectionné dans ladite mémoire historique, en réaction à l'instruction de sélection de canal, et
- régler de façon cyclique le récepteur sur lesdits au moins trois canaux ayant été sélectionnés précédemment et qui se trouvent dans une mémoire historique, en réaction à des opérations successives d'une instruction de rappel (74) exécutable par l'usager.

2. Procédé selon la revendication 1, la mémoire historique étant mise à jour en réaction à l'instruction de sélection de canal de sorte que le canal sélectionné le moins récemment soit éliminé de ladite mémoire historique.

3. Procédé selon la revendication 1, la mémoire historique étant mise à jour en réaction à l'instruction de sélection de canal de sorte que le canal sur lequel le récepteur était réglé le moins récemment soit éliminé de ladite mémoire historique.

4. Procédé selon la revendication 2 ou 3, l'étape de réglage suivant une base cyclique comprenant l'opération consistant à régler le récepteur sur les canaux répertoriés en ordre inverse de leur sélection.

5. Procédé selon la revendication 2 ou 3, l'étape de réglage suivant une base cyclique comprenant l'opération consistant à régler le récepteur sur les canaux répertoriés en ordre inverse de leur réglage précédent.

6. Récepteur de signaux comprenant :
- des moyens de réglage (1) servant à régler le récepteur sur un canal qui représente l'un d'une pluralité de signaux recevables ;
- des moyens de saisie (7) aptes à être actionnés par l'usager pour sélectionner un canal en réaction à une instruction (71, 72) de sélection de canal ;
- une mémoire historique (5) destinée à conserver une liste d'au moins trois canaux ayant été sélectionnés précédemment ; et
- des moyens de commande (4) qui sont agencés de façon à stocker le canal sélectionné dans ladite mémoire historique, en réaction à l'instruction de sélection de canal, et qui sont agencés en outre pour commander les moyens de réglage afin de régler de façon cyclique le récepteur sur lesdits au moins trois canaux ayant été sélectionnés précédemment et qui se trouvent dans une mémoire historique, en réaction à des opérations successives d'une instruction de rappel (74) exécutable par l'usager.
